# EUROPEAN PATENT SPECIFICATION

(11) **EP 2 703 739 B1**
(45) Date of publication and mention of the grant of the patent: **29.07.2015**
(21) Application number: 12182609.3
(22) Date of filing: 31.08.2012
(51) Int. Cl.: F24C 15/32, F22B 1/28

(54) **A cooking oven with an oven cavity and a steam cooking arrangement**
Kochherd mit Ofeninnenraum und Dampfkochanordnung
Four de cuisson avec cavité de four et dispositif de cuisson à la vapeur

(43) Date of publication of application: 05.03.2014
(73) Proprietor: Electrolux Home Products Corporation N.V., 1130 Brussels (BE)
(72) Inventor: Raggi, Tommaso, 47100 Forlì (IT)
(74) Representative: Röder, Richard

(56) References cited:
- EP-A2- 0 334 836
- EP-A2- 1 906 099
- DE-A1-102009 055 148
- FR-A1- 2 958 719

## Description

The present invention relates to a cooking oven with an oven cavity and a steam cooking arrangement according to the preamble of claim 1.

A conventional steam cooking arrangement for a cooking oven comprises usually a water reservoir, a steam generator, a steam pipe, a steam nozzle, a water drain conduit and a water drain valve. The steam generator heats up and vaporizes water from the water reservoir. The steam nozzle introduces the resulting steam from the steam generator into the oven cavity of the cooking oven. The water drain conduit and the water drain valve form an emptying system. The water drain conduit is typically formed as a rigid tube and the water drain valve is at the end of said tube. The rigid tube is usually made of metal, while the water drain valve is mostly made of plastics.

The water drain valve can be opened by the user, when remaining water after usage should be removed from the water reservoir and the drain conduit. The water drain valve must be carefully opened by the user in order to avoid leakage and damages. Moreover, a tool or a special device, like an actuator, is required for operating the water drain valve. Additionally, the user has to handle at the same time the water drain valve and/or the actuator and a water container that the user has to provide for collecting water removed from the water reservoir; such operation being rather complicated.

Documents DE 10 2009 055 148, EP 1 906 099, FR 2958719 and EP 0 334 836 disclose state of the art relevant to the invention.

It is an object of the present invention to provide a cooking oven with a steam cooking arrangement, wherein the steam cooking arrangement is easy to handle by low complexity.

The object of the present invention is achieved by the cooking oven according to claim 1.

According to the present invention the water drain conduit includes a flexible pipe arranged or arrangeable in a rest position and in a working position, wherein the flexible pipe is accommodated in a bent configuration inside the cooking oven in the rest position, and wherein the flexible pipe extends out of the cooking oven for draining water in the working position.

The core of the present invention is the flexible pipe on the one hand and the mobility between the rest position and working position of said flexible pipe on the other hand. The rest position of the flexible pipe is obtained by pushing said flexible pipe into the cooking oven. The working position of the flexible pipe is obtained by pulling said flexible pipe out of the cooking oven. The flexible pipe is easily movable between the rest position and the working position by the user. The flexible pipe and the water drain valve allow low complexity. There are no assembly operations for the draining water procedure. The user has only to pull out the flexible tube and to open the water drain valve. Then, the user has to close the water drain valve and to push in the flexible tube again. The draining water procedure is very easy and the risk of wetting the cooking oven is avoided. The water can flow away from the cooking oven.

Further, the water drain conduit may be entirely formed by the flexible pipe or it may include a rigid water drain pipe interconnected between the water reservoir and the flexible pipe. Thus, the water conduit between the water reservoir and the water drain valve comprises a rigid and a flexible portion.

In particular, the water drain valve is an integral end part of the flexible pipe. This contributes to a low complexity.

The water drain valve may be arranged or arrangeable at a wall of the cooking oven or oven chassis in the rest position. Thus, the water drain valve and the end of the flexible pipe are accessible by the user in an easy way.

For example, the water drain valve is arranged or arrangeable at a front wall or front panel of the cooking oven in the rest position.

Alternatively, the water drain valve may be arranged or arrangeable at a front wall of an oven chassis of the cooking oven in the rest position. In this case, the water drain valve may be arranged or arrangeable at a flange of the oven cavity.

In contrast, the water drain valve may be arranged or arrangeable spaced apart from the cooking oven in the working position.

Preferably, the water drain valve is arranged or arrangeable spaced apart from the front side of the cooking oven in the working position.

Further, the flexible pipe may be arranged or arrangeable in an intermediate space between a sidewall of the oven cavity and a sidewall of the oven chassis.

Moreover, the steam cooking arrangement may comprise a fill port arranged at an upper front panel of the cooking oven.

The steam cooking arrangement may comprise a water supply pipe interconnected between the fill port and the water reservoir. Preferably, the water supply pipe is arranged above the oven cavity.

According to the preferred embodiment of the present invention the water reservoir is arranged at the rear side of the cooking oven.

In a similar way, the steam generator may be arranged at the rear side of the cooking oven.

Further, the water drain valve comprises a tap for opening and closing said water drain valve. The tap allows an easy handling for the user.

The water drain valve may be embodied as a cap associated to the flexible pipe, said cap being insertable into and removable from an end portion of the flexible pipe.

Preferably, the flexible pipe is made of at least one plastic material.

In particular, the flexible pipe is made of at least one antibacterial plastic material.

More particularly, the flexible pipe is made of at least a food compliant material, i.e. a material that may enter in contact with food without alter its edibility properties in a manner that may cause risk for user health.

The novel and inventive features believed to be the characteristic of the present invention are set forth in the appended claims.

The invention will be described in further detail with reference to the drawings, in which
- FIG 1: illustrates a perspective view of a cooking oven with a steam cooking arrangement according to a preferred embodiment of the present invention,
- FIG 2: illustrates a perspective view of the cooking oven with the steam cooking arrangement according to the preferred embodiment of the present invention, wherein the sidewalls of the oven chassis has been removed and a flexible pipe is in a rest position,
- FIG 3: illustrates a perspective view of the cooking oven with the steam cooking arrangement according to the preferred embodiment of the present invention, wherein the sidewalls of the oven chassis has been removed and the flexible pipe is in a working position, and
- FIG 4: illustrates a rear view of the cooking oven with the steam cooking arrangement according to the preferred embodiment of the present invention.

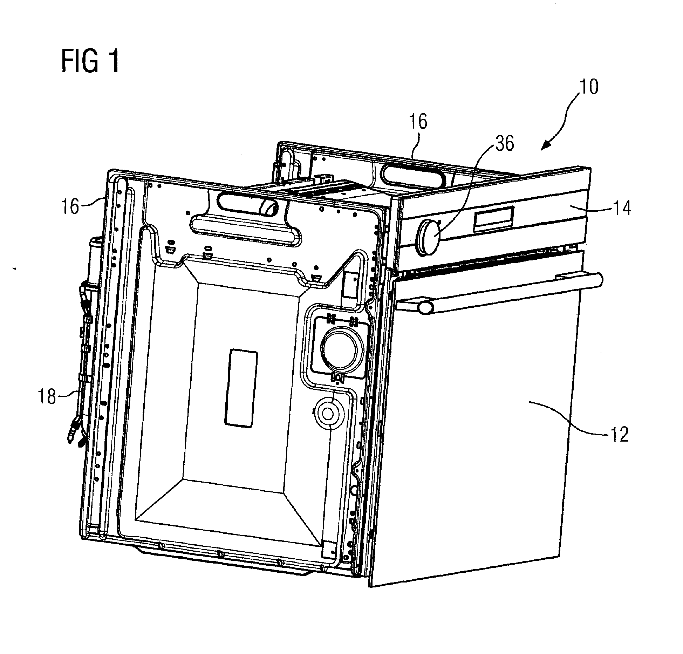

FIG 1 illustrates a perspective view of a cooking oven 10 with a steam cooking arrangement according to a preferred embodiment of the present invention. The cooking oven 10 comprises an oven door 12 and an upper front panel 14 at its front side. In FIG 1 the oven door 12 is closed. A fill port 36 is arranged at the upper front panel 14. The oven chassis of the cooking oven 10 comprises two sidewalls 16. The steam cooking arrangement of the cooking oven 10 includes a steam generator 18 arranged at the rear side of the oven chassis.

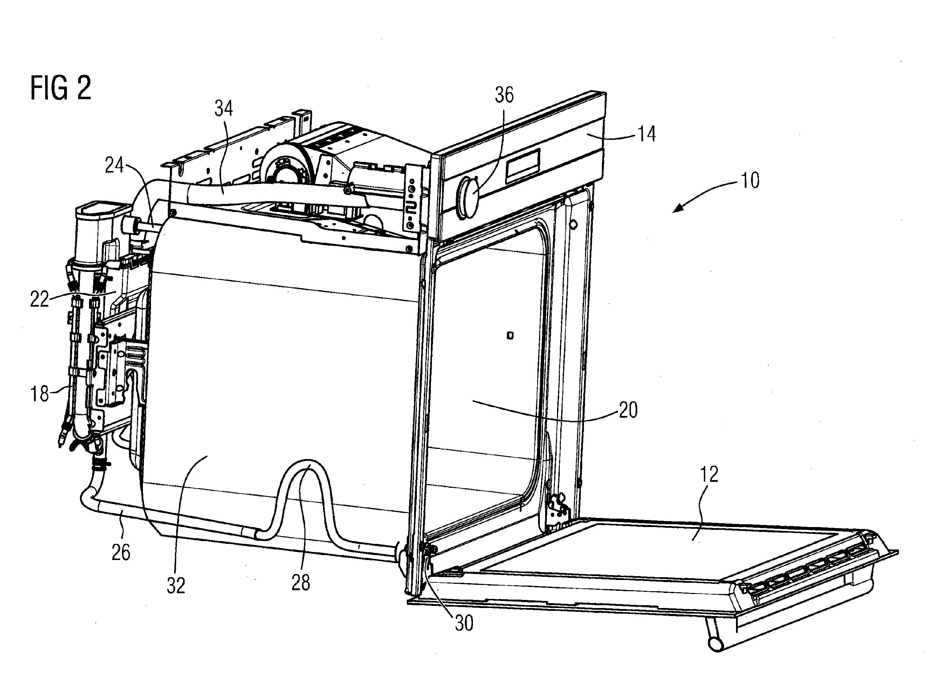

FIG 2 illustrates a perspective view of the cooking oven 10 with the steam cooking arrangement according to the preferred embodiment of the present invention, wherein the sidewalls 16 of the oven chassis are removed and a flexible pipe 28 is in a rest position. In FIG 2 the oven door 12 is open. The cooking oven 10 comprises an oven cavity 20 closable by the oven door 12.

The steam cooking arrangement of the cooking oven 10 includes the steam generator 18, a water reservoir 22, a steam pipe 24, a steam nozzle, a water drain pipe 26, a flexible pipe 28, a water drain valve 30, a water supply pipe 34 and the fill port 36.

The steam generator 18 and the water reservoir 22 are arranged at the rear side of the cooking oven 10. The steam nozzle is arranged at the top side of the oven cavity 20. The steam nozzle is not shown. The steam pipe 24 is interconnected between the steam generator 18 and the steam nozzle. The steam generator 18 heats up and vaporizes water from the water reservoir 22. The resulting steam is conveyed by the steam pipe 24 to the steam nozzle. The steam nozzle introduces the steam into the oven cavity 20.

The water drain pipe 26 and the flexible pipe 28 are connected in series. The water drain pipe 26 is a rigid pipe. The water drain pipe 26 and the flexible pipe 28 are interconnected between the water reservoir 22 and the water drain valve 30. The water drain pipe 26 and the flexible pipe 28 are provided for emptying the water reservoir 22, wherein the water flows out through the water drain valve 30. Thereby, the water passes at first the water drain pipe 26, then the flexible pipe 28, and at last the water drain valve 30. The water drain pipe 26 and the flexible pipe 28 are arranged between a left sidewall 32 of the oven cavity 20 and the left sidewall 16 of the oven chassis.

In FIG 2 the flexible pipe 28 is in the rest position. The flexible pipe 28 is moveable into and removable from the intermediate space between the left sidewall 32 of the oven cavity 20 and the left sidewall 16 of the oven chassis. In the rest position the complete portion of the flexible pipe 28 is substantially in the intermediate space between the left sidewall 32 of the oven cavity 20 and the left sidewall 16 of the oven chassis. The flexible pipe 28 is squeezed in the rest position, so that the shape of the flexible pipe 28 comprises curves. The water drain valve 30 forms an integral end part of the flexible pipe 28. In the rest position, the water drain valve 30 is arranged at a front side of the oven chassis. If the oven door 12 is closed, then the water drain valve 30 is behind said oven door 12 in the rest position.

The water supply pipe 34 is interconnected between the water reservoir 22 and the fill port 36 at the upper front panel 14 of the cooking oven 10. The water supply pipe 34 allows that the water reservoir 22 may be filled by the user from the fill port 36 at the upper front panel 14.

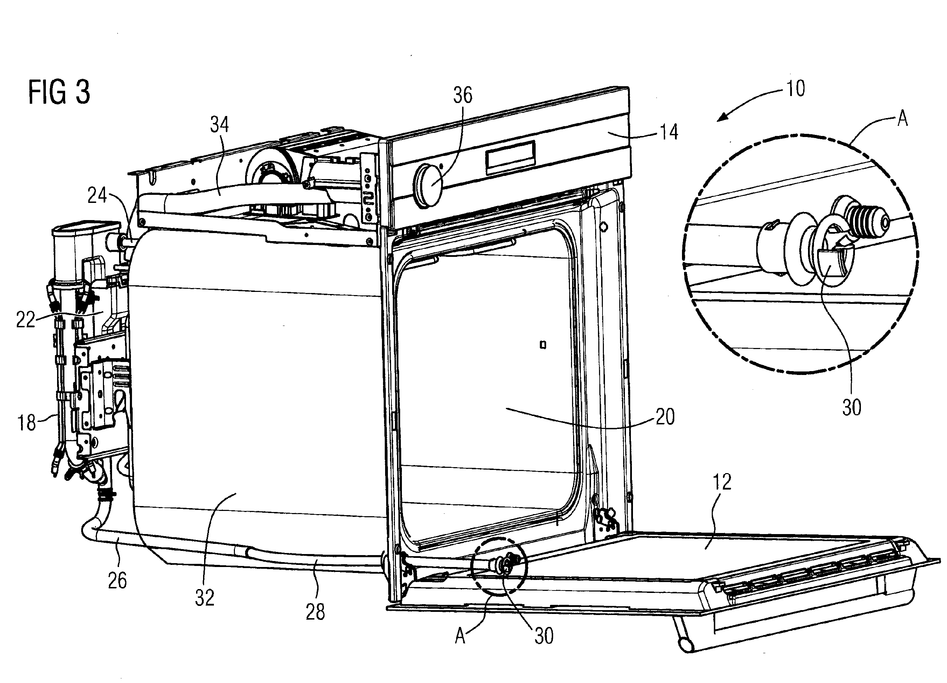

FIG 3 illustrates a perspective view of the cooking oven 10 with the steam cooking arrangement according to the preferred embodiment of the present invention, wherein the sidewalls of the oven chassis has been removed and the flexible pipe 28 is a working position. FIG 3 differs from FIG 2 in the arrangement and position of the flexible pipe 28.

In the working position of the flexible pipe 28, a front portion of said flexible pipe 28 is pulled out of the cooking oven 10, while a rear portion of the said flexible pipe 28 remains in the intermediate space between the left sidewall 32 of the oven cavity 20 and the left sidewall 16 of the oven chassis. The shape of the flexible pipe 28 is substantially linear. In the working position, there is a downward slope from the water reservoir 22 via the water drain pipe 26 and the flexible pipe 28 to the water drain valve 30. Thus, in the working position of the flexible pipe 28 the user can empty the water reservoir 22. In the working position, the water drain valve 30 is arranged in front of the oven chassis and above the open oven door 12.

The working position of the flexible pipe 28 is obtained by pulling out the front portion of said the flexible pipe 28 of the intermediate space by the user. Accordingly, the rest position of the flexible pipe 28 is obtained by pushing in the front portion of said the flexible pipe 28 into the intermediate space by the user.

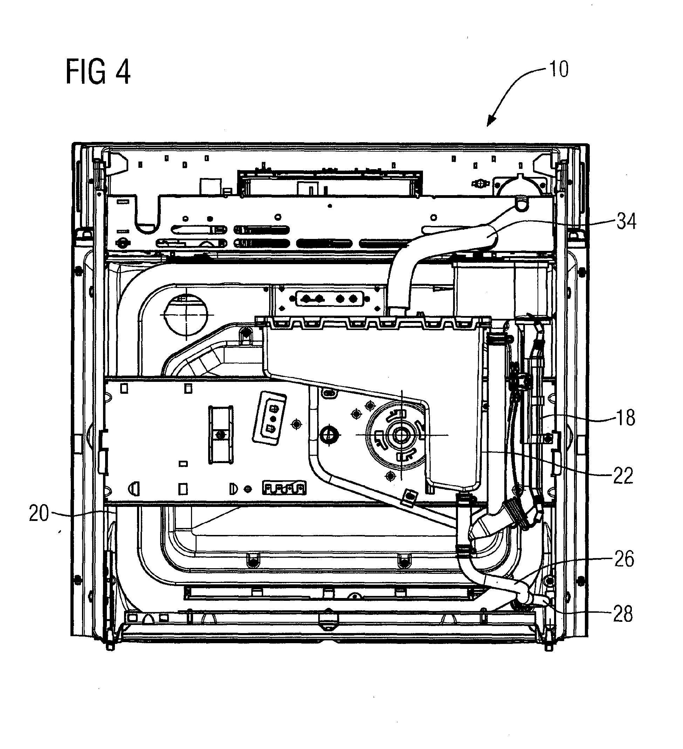

FIG 4 illustrates a rear view of the cooking oven 10 with the steam cooking arrangement according to the preferred embodiment of the present invention.

The steam generator 18 and the water reservoir 22 are arranged at the rear side of the cooking oven 10. The water supply pipe 34 is arranged above the water reservoir 22 and oven cavity 20. The water drain pipe 26 and the flexible pipe 28 are arranged below the water reservoir 22. Further, the water drain pipe 26 and the flexible pipe 28 are arranged below and/or beside the oven cavity 20.

The flexible pipe 28 is movable between the rest position and the working position by the user. In the rest position the flexible pipe 28 is accommodated in a bent configuration inside the cooking oven 10. In the working position the flexible pipe 28 extends out of the cooking oven 10 for draining water. The water drain pipe 26, the flexible pipe 28 and the water drain valve 30 allow low complexity.

There are no assembly operations for the draining water procedure. The user has only to pull the flexible tube 28 out of the cooking oven 10 and to open the water drain valve 30. Then, the user has to close the water drain valve 30 and to push the flexible tube 28 into the cooking oven 10 again.

The user may orient the flexible pipe 28 and the water drain valve 30 according to the requirements. The draining water procedure is very easy and the risk of wetting the cooking oven 10 is avoided. The water can flow away from the cooking oven 10.

The water drain valve 30 can be realized by low complexity. A simple tap may be used as or instead of the water drain valve 30. Alternatively, the water drain valve may be embodied as a cap associated to the flexible pipe, said cap being insertable into and removable from an end portion of the flexible pipe.
The flexible pipe 28 can be easily installed inside the cooking oven 10. The flexible pipe 28 requires no support elements along the pipe path.

The flexible pipe 28 may be made of plastic materials. In particular, the flexible pipe 28 may be made of antibacterial plastic materials.

Although an illustrative embodiment of the present invention has been described herein with reference to the accompanying drawings, it is to be understood that the present invention is not limited to that precise embodiment, and that various other changes and modifications may be affected therein by one skilled in the art without departing from the scope of the invention. All such changes and modifications are intended to be included within the scope of the invention as defined by the appended claims.

### List of reference numerals

- 10: cooking oven
- 12: oven door
- 14: upper front panel
- 16: sidewall of the oven chassis
- 18: steam generator
- 20: oven cavity
- 22: water reservoir
- 24: steam pipe
- 26: water drain pipe
- 28: flexible pipe
- 30: water drain valve
- 32: sidewall of the oven cavity
- 34: water supply pipe
- 36: fill port

## Claims

1. A cooking oven (10) with an oven cavity (20) and a steam cooking arrangement, wherein said steam cooking arrangement comprises:
- a water reservoir (22) for storing water,
- at least one steam generator (18) connected to the water reservoir (22) and provided for heating up and vaporizing the water from the water reservoir (22),
- at least one steam nozzle arranged at a wall of the oven cavity (20) and provided for inducing steam into said oven cavity (20),
- at least one steam pipe (24) interconnected between the steam generator (18) and the steam nozzle and provided for conveying steam,
- a water drain valve (30) provided for emptying the water reservoir (22), and
- a water drain conduit (26, 28) interconnected between the water reservoir (22) and the water drain valve (30),
**characterized in, that**
the water drain conduit includes a flexible pipe (28) arranged or arrangeable in a rest position and in a working position, wherein the flexible pipe (28) is accommodated in a bent configuration inside the cooking oven (10) in the rest position, and wherein the flexible pipe (28) extends out of the cooking oven (10) for draining water in the working position.

2. The cooking oven according to claim 1,
**characterized in, that**
the water drain conduit includes a rigid water drain pipe (26) interconnected between the water reservoir (22) and the flexible pipe (28).

3. The cooking oven according to claim 1 or 2,
**characterized in, that**
the water drain valve (30) is an integral end part of the flexible pipe (28).

4. The cooking oven according to any one of the preceding claims,
**characterized in, that**
the water drain valve (30) is arranged or arrangeable at a wall, in particular at a front wall or front panel of the cooking oven (10) in the rest position.

5. The cooking oven according to any one of the claims 1 to 3,
**characterized in, that**
the water drain valve (30) is arranged or arrangeable at a front wall of an oven chassis of the cooking oven (10) in the rest position.

6. The cooking oven according to any one of the preceding claims,
**characterized in, that**
the water drain valve (30) is arranged or arrangeable spaced apart from the cooking oven (10) in the working position.

7. The cooking oven according to claim 6,
**characterized in, that**
the water drain valve (30) is arranged or arrangeable spaced apart from the front side of the cooking oven (10) in the working position.

8. The cooking oven according to any one of the preceding claims,
**characterized in, that**
the flexible pipe (28) is arranged or arrangeable in an intermediate space between a sidewall (32) of the oven cavity (20) and a sidewall (16) of the oven chassis.

9. The cooking oven according to any one of the preceding claims,
**characterized in, that**
the steam cooking arrangement comprises a fill port (36) arranged at an upper front panel (14) of the cooking oven (10).

10. The cooking oven according to claim 9,
**characterized in, that**
the steam cooking arrangement comprises a water supply pipe (34) interconnected between the fill port (36) and the water reservoir (22).

11. The cooking oven according to any one of the preceding claims,
**characterized in, that**
the water reservoir (22) is arranged at the rear side of the cooking oven (10).

12. The cooking oven according to any one of the preceding claims,
**characterized in, that**
the steam generator (18) is arranged at the rear side of the cooking oven.

13. The cooking oven according to any one of the preceding claims,
**characterized in, that**
the water drain valve (30) comprises a tap for opening and closing said water drain valve (30).

14. The cooking oven according to any one of the preceding claims,
**characterized in, that**
the flexible pipe (28) is made of at least one plastic material.

15. The cooking oven according to any one of the preceding claims,
**characterized in, that**
the flexible pipe (28) is made of at least one antibacterial plastic material.

## Patentansprüche

1. Kochherd (10) mit einem Ofeninnenraum (20) und einer Dampfkochanordnung, wobei die Dampfkochanordnung Folgendes umfasst:
- ein Wasserreservoir (22) zum Speichern von Wasser,
- mindestens einen Dampferzeuger (18), der mit dem Wasserreservoir (22) verbunden und dazu vorgesehen ist, das Wasser vom Wasserreservoir (22) zu erhitzen und zu verdampfen,
- mindestens eine Dampfdüse, die an einer Wand des Ofeninnenraums (20) angeordnet und dazu vorgesehen ist, Dampf in den Ofeninnenraum (20) einzuleiten,
- mindestens ein Dampfrohr (24), das zwischen dem Dampferzeuger (18) und der Dampfdüse verbunden und zum Dampftransport vorgesehen ist,
- ein Wasserablaufventil (30), das zum Leeren des Wasserreservoirs (22) vorgesehen ist, und
- eine Wasserablaufleitung (26, 28), die zwischen dem Wasserreservoir (22) und dem Wasserablaufventil (30) verbunden ist,
**dadurch gekennzeichnet, dass**
die Wasserablaufleitung einen biegsamen Schlauch (28) aufweist, der in einer Ruheposition und in einer Betriebsposition angeordnet ist oder werden kann, wobei der Schlauch (28) in der Ruheposition in einer gebogenen Konfiguration im Kochherd (10) untergebracht ist und wobei sich der biegsame Schlauch (28) in der Betriebsposition aus dem Kochherd (10) heraus erstreckt, damit Wasser abläuft.

2. Kochherd nach Anspruch 1,
**dadurch gekennzeichnet, dass**
die Wasserablaufleitung ein starres Wasserablaufrohr (26) aufweist, das zwischen dem Wasserreservoir (22) und dem biegsamen Schlauch (28) verbunden ist.

3. Kochherd nach Anspruch 1 oder 2,
**dadurch gekennzeichnet, dass**
das Wasserablaufventil (30) ein integrales Endteil des biegsamen Schlauchs (28) ist.

4. Kochherd nach einem der vorhergehenden Ansprüche,
**dadurch gekennzeichnet, dass**
das Wasserablaufventil (30) in der Ruheposition an einer Wand, insbesondere einer vorderen Wand oder Vorderplatte des Kochherds (10), angeordnet ist oder werden kann.

5. Kochherd nach einem der Ansprüche 1 bis 3,
**dadurch gekennzeichnet, dass**
das Wasserablaufventil (30) in der Ruheposition an einer vorderen Wand eines Ofengehäuses des Kochherds (10) angeordnet ist oder werden kann.

6. Kochherd nach einem der vorhergehenden Ansprüche,
**dadurch gekennzeichnet, dass**
das Wasserablaufventil (30) in der Betriebsposition vom Kochherd (10) beabstandet angeordnet ist oder werden kann.

7. Kochherd nach Anspruch 6,
**dadurch gekennzeichnet, dass**
das Wasserablaufventil (30) in der Betriebsposition von der vorderen Seite des Kochherds (10) beabstandet angeordnet ist oder werden kann.

8. Kochherd nach einem der vorhergehenden Ansprüche,
**dadurch gekennzeichnet, dass**
der biegsame Schlauch (28) in einem Zwischenraum zwischen einer Seitenwand (32) des Ofeninnenraums (20) und einer Seitenwand (16) des Ofengehäuses angeordnet ist oder werden kann.

9. Kochherd nach einem der vorhergehenden Ansprüche,
**dadurch gekennzeichnet, dass**
die Dampfkochanordnung eine Füllöffnung (36) umfasst, die an einer oberen vorderen Platte (14) des Kochherds (10) angeordnet ist.

10. Kochherd nach Anspruch 9,
**dadurch gekennzeichnet, dass**
die Dampfkochanordnung ein Wasserzuführrohr (34) umfasst, das zwischen der Füllöffnung (36) und dem Wasserreservoir (22) verbunden ist.

11. Kochherd nach einem der vorhergehenden Ansprüche,
**dadurch gekennzeichnet, dass**
das Wasserreservoir (22) an der Rückseite des Kochherds (10) angeordnet ist.

12. Kochherd nach einem der vorhergehenden Ansprüche,
**dadurch gekennzeichnet, dass**
der Dampferzeuger (18) an der Rückseite des Kochherds angeordnet ist.

13. Kochherd nach einem der vorhergehenden Ansprüche,
**dadurch gekennzeichnet, dass**
das Wasserablaufventil (30) einen Hahn zum Öffnen und Schließen des Wasserablaufventils (30) umfasst.

14. Kochherd nach einem der vorhergehenden Ansprüche,
**dadurch gekennzeichnet, dass**
der biegsame Schlauch (28) aus mindestens einem Kunststoffmaterial hergestellt ist.

15. Kochherd nach einem der vorhergehenden Ansprüche,
**dadurch gekennzeichnet, dass**
der biegsame Schlauch (28) aus mindestens einem antibakteriellen Kunststoffmaterial hergestellt ist.

## Revendications

1. Four de cuisson (10) comprenant une cavité de four (20) et un dispositif de cuisson à la vapeur, ledit dispositif de cuisson à la vapeur comprenant
- un réservoir d'eau (22) pour stocker de l'eau,
- au moins un générateur de vapeur (18) connecté au réservoir d'eau (22) et prévu pour chauffer et évaporer l'eau provenant du réservoir d'eau (22),
- au moins une buse à vapeur disposée au niveau d'une paroi de la cavité de four (20) et prévue pour provoquer de la vapeur dans ladite cavité de four (20),
- au moins une conduite de vapeur (24) interconnectée entre le générateur de vapeur (18) et la buse à vapeur et prévue pour acheminer de la vapeur,
- une soupape d'évacuation d'eau (30) prévue pour vider le réservoir d'eau (22), et
- un conduit d'évacuation d'eau (26, 28) interconnecté entre le réservoir d'eau (22) et la soupape d'évacuation d'eau (30),
**caractérisé en ce que**
le conduit d'évacuation d'eau comporte un tuyau flexible (28) disposé ou pouvant être disposé dans une position de repos et dans une position de travail, le tuyau flexible (28) étant reçu dans une configuration courbée à l'intérieur du four de cuisson (10) dans la position de repos, et le tuyau flexible (28) s'étendant hors du four de cuisson (10) pour évacuer de l'eau dans la position de travail.

2. Four de cuisson selon la revendication 1, **caractérisé en ce que**
le conduit d'évacuation d'eau comporte un tuyau rigide d'évacuation d'eau (26) interconnecté entre le réservoir d'eau (22) et le tuyau flexible (28).

3. Four de cuisson selon la revendication 1 ou 2,
**caractérisé en ce que**
la soupape d'évacuation d'eau (30) est une partie d'extrémité intégrée du tuyau flexible (28).

4. Four de cuisson selon l'une quelconque des revendications précédentes,
**caractérisé en ce que**
la soupape d'évacuation d'eau (30) est disposée ou peut être disposée au niveau d'une paroi, en particulier au niveau d'une paroi avant ou d'un panneau avant du four de cuisson (10) dans la position de repos.

5. Four de cuisson selon l'une quelconque des revendications 1 à 3,
**caractérisé en ce que**
la soupape d'évacuation d'eau (30) est disposée ou peut être disposée au niveau d'une paroi avant d'un châssis de four du four de cuisson (10) dans la position de repos.

6. Four de cuisson selon l'une quelconque des revendications précédentes,
**caractérisé en ce que**
la soupape d'évacuation d'eau (30) est disposée ou peut être disposée de manière espacée du four de cuisson (10) dans la position de travail.

7. Four de cuisson selon la revendication 6,
**caractérisé en ce que**
la soupape d'évacuation d'eau (30) est disposée ou peut être disposée de manière espacée du côté avant du four de cuisson (10) dans la position de travail.

8. Four de cuisson selon l'une quelconque des revendications précédentes,
**caractérisé en ce que**
le tuyau flexible (28) est disposé ou peut être disposé dans un espace intermédiaire entre une paroi latérale (32) de la cavité de four (20) et une paroi latérale (16) du châssis de four.

9. Four de cuisson selon l'une quelconque des revendications précédentes,
**caractérisé en ce que**
le dispositif de cuisson à la vapeur comprend un orifice de remplissage (36) disposé au niveau d'un panneau avant supérieur (14) du four de cuisson (10).

10. Four de cuisson selon la revendication 9,
**caractérisé en ce que**
le dispositif de cuisson à la vapeur comprend un tuyau d'alimentation en eau (34) interconnecté entre l'orifice de remplissage (36) et le réservoir d'eau (22).

11. Four de cuisson selon l'une quelconque des revendications précédentes,
**caractérisé en ce que**
le réservoir d'eau (22) est disposé au niveau du côté arrière du four de cuisson (10).

12. Four de cuisson selon l'une quelconque des revendications précédentes,
**caractérisé en ce que**
le générateur de vapeur (18) est disposé au niveau du côté arrière du four de cuisson.

13. Four de cuisson selon l'une quelconque des revendications précédentes,
**caractérisé en ce que**
la soupape d'évacuation d'eau (30) comprend un robinet pour ouvrir et fermer ladite soupape d'évacuation d'eau (30).

14. Four de cuisson selon l'une quelconque des revendications précédentes,
**caractérisé en ce que**
le tuyau flexible (28) est constitué d'au moins un matériau plastique.

15. Four de cuisson selon l'une quelconque des revendications précédentes,
**caractérisé en ce que**
le tuyau flexible (28) est constitué d'au moins un matériau plastique antibactérien.
